# FASCICULE DE BREVET EUROPEEN

(11) **EP 0 736 954 B1**
(45) Date de publication et mention de la délivrance du brevet: **25.11.1998**
(21) Numéro de dépôt: 96105336.0
(22) Date de dépôt: 03.04.1996
(51) Int. Cl.: H02K 5/24, F04D 29/66, F16F 1/376

(54) **Dispositif de fixation élastique d'un moteur électrique à l'intérieur d'un boîtier, notamment pour véhicule automobile**
Vorrichtung zur elastischen Befestigung eines Elektromotors in einem Gehäuse, insbesondere für Kraftfahrzeuge
Device for elastically supporting an electric motor inside a housing, particularly for motor vehicles

(30) Priorité: 03.04.1995 FR 9503893
(43) Date de publication de la demande: 09.10.1996
(73) Titulaire: VALEO CLIMATISATION, 78320 Le Mesnil Saint-Denis (FR)
(72) Inventeur: Boucheret, Bernard, 92230 Gennevilliers (FR)
(74) Mandataire: Gamonal, Didier

(56) Documents cités:
- EP-A- 0 072 465
- DE-A- 4 136 485
- DE-A- 4 306 588
- GB-A- 433 850

## Description

L'invention concerne un dispositif de fixation élastique d'un moteur électrique à l'intérieur d'un boîtier, destiné notamment à alimenter en courant électrique un groupe motoventilateur de véhicule automobile.

Cette invention concerne plus particulièrement un dispositif de fixation d'un moteur muni de pattes de fixation radiales recevant des éléments amortisseurs propres à être logés dans des évidements de forme adaptée prévus à l'intérieur du boîtier, lesdits évidements présentant chacun une face radiale ouverte et une face axiale ouverte pour autoriser l'introduction ou l'enlèvement axial dudit moteur.

Un tel dispositif est enseigné par exemple par la publication FR-A-2 693 779.

Dans ce type de dispositif, chaque élément amortisseur s'appuie radialement sur des surfaces d'appui disposées obliquement sur le boîtier. Il est donc possible, sous certaines conditions, d'absorber les vibrations radiales qui se produisent perpendiculairement à l'axe du moteur du fait, par exemple, d'un défaut d'équilibrage, ainsi qu'une partie des vibrations tangentielles.

En revanche, les autres vibrations, comme par exemple les vibrations axiales, ou les combinaisons d'au moins deux vibrations de directions différentes, ne sont que partiellement absorbées par ces dispositifs connus.

Par ailleurs, les éléments amortisseurs sont généralement fabriqués dans des matériaux élastiques compacts. Une fois leur limite de compressibilité atteinte, ils ne peuvent plus assurer leur fonction d'amortissement. Ce cas particulier est fréquemment rencontré sur les chaînes de montage, du fait des tolérances de fabrication imposées à chaque élément du dispositif. Dans certains cas extrêmes, il n'est même pas possible d'installer le moteur dans le boîtier, ce qui nécessite un nouveau moteur. Cela provoque une perte de temps, mais également nécessite un stock important de moteurs de rechange.

En conséquence, un but de l'invention est de procurer un dispositif de fixation élastique qui ne présente pas les inconvénients des dispositifs de la technique antérieure.

L'invention propose à cet effet un dispositif de fixation élastique du type défini en introduction, dans lequel on prévoit :
- un organe de retenue de forme adaptée à celle du boîtier et comportant au moins une surface d'appui propre à supporter chaque élément amortisseur dans la région de la face axiale ouverte de l'évidement qui le loge,
- des moyens de fixation amovible entre le boîtier et l'organe de retenue, propres à immobiliser axialement chaque patte de fixation à l'intérieur d'un évidement, et
- des éléments amortisseurs comprenant sur leurs faces externes, en regard des évidements, une pluralité de rainures.

Cela permet à la fois le rattrapage axial par les moyens de fixation de l'organe de retenue et le découplage élastique, dans toutes les directions, entre le moteur et le boîtier.

Ainsi, la coopération entre l'organe de retenue et les éléments amortisseurs permet, d'une part d'absorber les vibrations axiales, et d'autre part, de réaliser un dispositif particulièrement simple à assembler ou désassembler.

Par ailleurs, grâce aux rainures réalisées sur l'ensemble des faces externes des éléments amortisseurs, il est possible non seulement d'absorber les vibrations axiales, radiales et tangentielles, et leurs combinaisons, mais également d'utiliser des moteurs dont les dimensions des pattes de fixation présentent des écarts légèrement supérieurs à ceux autorisés par les tolérances de fabrication.

Selon une autre caractéristique de l'invention, les moyens de fixation amovible comprennent des ouvertures de forme sensiblement rectangulaire, chaque ouverture étant réalisée dans une face radiale fermée de chaque évidement, et des saillies formant ergot de forme adaptée aux ouvertures, chaque ergot étant logé sur l'organe de retenue en regard d'une ouverture.

De la sorte, il est possible, grâce à un choix judicieux des formes respectives de l'ouverture et de l'ergot, de rattraper un éventuel jeu axial entre l'une au moins des pattes de fixation du moteur et le boîtier qui les loge.

Dans une forme de réalisation préférentielle de l'invention, contrairement aux dispositifs connus dans lesquels les évidements présentent des faces de même extension axiale, au moins la face radiale fermée se prolonge axialement dans sa partie inférieure, le prolongement ainsi défini comprenant l'ouverture.

Par ailleurs, dans ce mode de réalisation, l'organe de retenue est une paroi comportant une partie centrale prolongée au moins au niveau de chaque logement, d'une part, par une première partie extrémale, formant la surface d'appui, et d'autre part, par une seconde partie extrémale sensiblement parallèle à la face radiale fermée et comprenant l'ergot.

On réalise ainsi des logements équipés chacun d'un prolongement sur lequel vient s'encliper l'organe de retenue, grâce à ces ergots, ledit organe formant un couvercle évidé au centre pour autoriser le passage du moteur. Ce mode de réalisation permet d'obtenir une certaine souplesse qui accroit encore plus la capacité du dispositif à absorber les vibrations et à tolérer des éléments de dimensions légèrement supérieurs aux tolérances imposées. Selon encore une autre caractéristique de l'invention, les rainures sont disposées axialement, radialement et tangentiellement sur les faces externes des éléments amortisseurs.

Dans un mode de réalisation préférentiel des éléments amortisseurs, leur face radiale avant comprend des rainures tangentielles, leurs faces inférieure et supérieure comprennent des rainures radiales, et leurs faces latérales comprennent des rainures axiales.

Comme le sait l'homme de l'art, chaque face externe d'élément amortisseur travaille selon une direction préférentielle. En conséquence, en réalisant des rainures d'une direction choisie sur une face donnée, on peut renforcer leur action respective.

Dans la description qui suit, faite à titre d'exemple, on se réfère aux dessins annexés, sur lesquels :
- la figure 1 est une vue en coupe transversale, dans le plan médian, d'un dispositif de fixation selon l'invention, avant assemblage;
- la figure 2 est une vue en coupe transversale, agrandie, du dispositif de la figure 1, après introduction du moteur et assemblage;
- la figure 3 est une vue du dessus d'une coupe longitudinale selon l'axe II-II de la figure 2, du dispositif équipé du moteur, et
- la figure 4 est une vue de trois-quart d'un élément amortisseur selon l'invention.

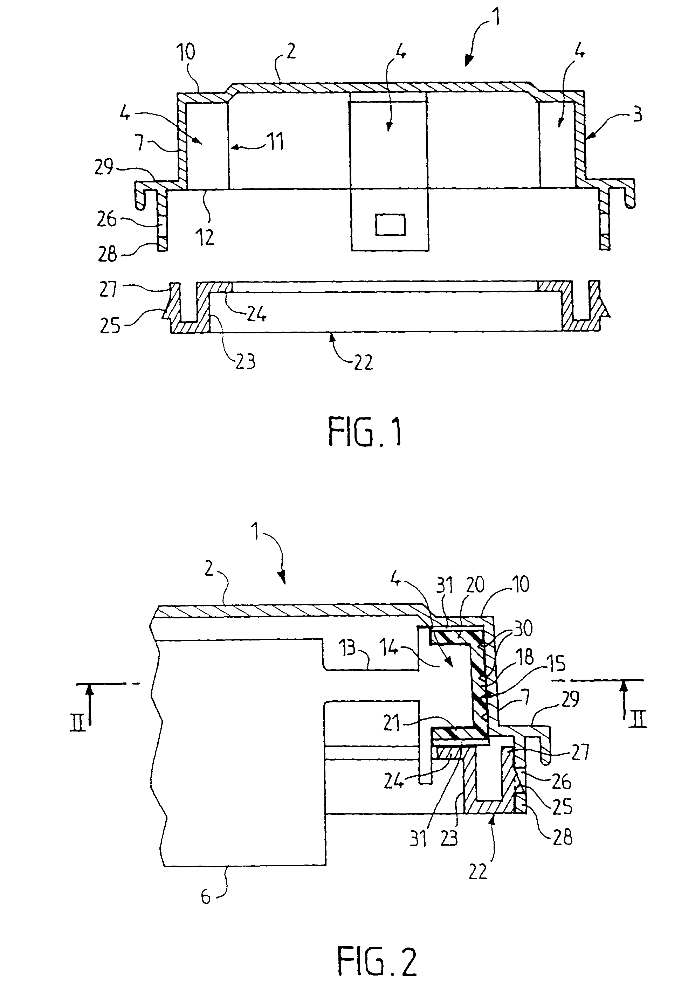

Le dispositif de fixation représenté à la figure 1 comprend un boîtier 1 réalisé en une unique pièce, de préférence en plastique moulé.

Ce boîtier 1 comprend une face supérieure 2 de forme sensiblement circulaire et prolongée à angle droit par une face latérale 3 de forme générale cylindrique. Cette face latérale 3 comprend quatre évidements 4 faisant saillie radialement vers l'extérieur du boîtier et ouverts vers l'intérieur dudit boîtier, chaque évidement étant disposé symétriquement par rapport au centre dudit boîtier 1, à 90° de ses deux premiers voisins.

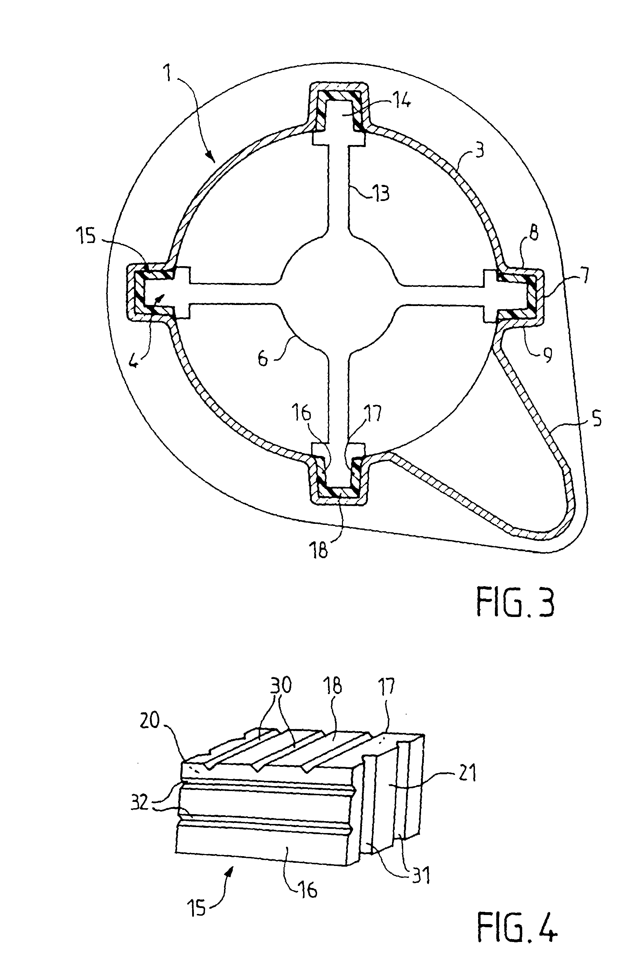

On peut prévoir également sur la face latérale 3, comme cela est représenté sur la figure 3, un autre évidement 5 faisant saillie vers l'extérieur et formant conduit axial de circulation d'air pour le refroidissement du moteur 6 du groupe motoventilateur du dispositif de chauffage et/ou climatisation d'un véhicule automobile, par exemple.

Chaque évidement 4 comprend quatre faces fermées (une face radiale avant 7, deux faces latérales 8 et 9 et une face axiale supérieure 10) et deux faces ouvertes (une face radiale arrière 11 et une face axiale inférieure 12).

Le moteur 6 est équipé de quatre pattes de fixation 13 s'étendant radialement et comportant une extrémité 14 de forme adaptée à celle d'un évidement 4, afin de coopérer avec celui-ci.

Chaque extrémité 14 de patte de fixation 13 est équipée d'un élément amortisseur amovible 15, en matériau élastique, formant capuchon à cinq faces, dont deux faces latérales 16 et 17, une face radiale avant 18, une face axiale supérieure 19 et une face axiale inférieure 20.

Ces éléments amortisseurs 15 sont destinés à servir d'amortisseurs de vibrations, notamment entre le moteur électrique 6 et le boîtier 1. A cet effet, les éléments amortisseurs 15 présentent de préférence une coupe transversale de forme légèrement trapézoïdale. Cette forme préférentielle est obtenue en réalisant une face radiale avant 18 dont l'épaisseur croît linéairement dans la direction axiale.

Ainsi équipées des éléments amortisseurs 15, les pattes de fixation 13 sont introduites dans les évidements 4 grâce aux fentes radiales arrière 11 et axiales inférieures 12 qui sont ouvertes.

Les faces latérales 16 et 17, radiale avant 18 et axiale supérieure 20 de chaque élément amortisseur 15 s'appuient ainsi de façon respectivement tangentielle, radiale et axiale sur les faces des évidements 4 en regard desquelles elles se trouvent.

Les extrémités des pattes de fixation 13 sont ainsi maintenues partiellement dans leurs évidements respectifs.

La face axiale inférieure 21 de chaque élément amortisseur 15 est supportée par un organe de retenue 22 formant couvercle de forme annulaire. Cet organe est évidé au centre pour autoriser le passage de la partie inférieure du moteur 6.

L'organe 22 comprend une paroi, de préférence moulée, comportant une partie centrale 23 sensiblement parallèle, sur tout son contour, à la face latérale 3 du boîtier 1, et prolongée à perpendicularité au moins au niveau de chaque évidement 4, dans sa partie supérieure, par une première partie extrémale 24 formant surface d'appui pour les faces axiales inférieures 21 des éléments amortisseurs.

De préférence, pour des raisons de solidité, la première partie extrémale 24 formant support prolonge la partie centrale 23 sur l'ensemble de son pourtour circulaire.

L'organe de retenue 22 est rendu solidaire du boîtier 1 grâce à des moyens de fixation amovible 25 et 26 qu'ils comportent respectivement.

De préférence, ces moyens 25 et 26 sont respectivement des ergots et des ouvertures de forme adaptée auxdits ergots.

Les ergots 25 sont logés sur l'organe de retenue 22, de préférence sur de secondes parties extrémales 27 qui prolongent au moins dans la région de chaque évidement 4 la partie centrale 23.

Dans un mode de réalisation préférentiel, la seconde partie extrémale 27 est sensiblement parallèle à la partie centrale 23 avec laquelle elle réalise une structure dont la coupe transversale forme un U.

Chaque ergot 25 coopère donc avec une ouverture 26 de forme sensiblement rectangulaire. Les ouvertures 26 sont réalisées dans des faces additionnelles 28 qui prolongent respectivement au moins chaque face radiale avant 7 d'évidement 4. L'extension axiale d'une face radiale avant est ainsi supérieure à celle des autres faces d'un évidement.

Dans le mode de réalisation préféré de l'invention, chaque face additionnelle 28 est légèrement déportée par rapport au plan dans lequel se situe la face radiale avant 7 en regard de laquelle elle se trouve. On peut prévoir à cet effet que les faces radiales soient prolongées à perpendicularité par des faces latérales 29, elles même prolongées à perpendicularité par les faces additionnelles 28.

Bien entendu, on peut prévoir d'autres modes de réalisation, dans lesquels la face latérale 3 du boîtier 1 comprend sur tout son pourtour un tel prolongement axial annulaire, ou bien seules les faces radiale 7 et latérales 8 et 9 de chaque évidement 4 soient prolongées par les faces additionnelles 28. Dans ce dernier cas, les faces radiales avant 7, et latérales 8 et 9 de chaque évidement présentent la même extension axiale.

L'organe de retenue 22 peut ainsi être partiellement intégré dans le boîtier 1 et rendu solidaire de celui-ci par coopération des ergots 25 et ouvertures 26.

Les ouvertures 26 étant, par ailleurs, de dimension légèrement supérieure à celle des ergots 25, il est possible de compenser un éventuel jeu axial induit par les tolérances de fabrication.

Cela procure un avantage important puisqu'il n'est plus nécessaire de rejeter les pièces dont les dimensions axiales ne sont pas conformes aux dimensions exactes des logements.

On se réfère maintenant à la figure 4 pour décrire le mode de réalisation préféré des éléments amortisseurs selon l'invention.

Afin de mieux absorber les vibrations, et leurs combinaisons éventuelles, on réalise sur les faces externes des éléments amortisseurs 15, lesquelles faces sont en regard des évidements 4, des rainures dont les orientations dépendent de la face de l'évidement en regard de laquelle elles se trouvent.

Ainsi, on réalise des rainures dites "tangentielles" 30 sur la face radiale avant, des rainures dites "radiales" 31 sur les faces axiales inférieure 21 et supérieure 20, et des rainures dites "axiales" 32 sur les faces latérales 16 et 17.

Ces rainures procurent également un autre avantage puisqu'elles permettent d'utiliser des moteurs électriques dont les dimensions des pattes de fixation 13 présentent des écarts légèrement supérieurs aux tolérances de fabrication.

Bien entendu, l'invention ne se limite pas au mode de réalisation décrit ci-avant. On peut envisager des variantes pour les moyens de fixation de l'organe de retenue sur le boîtier 1, comme par exemple positionner les ergots 25 sur les faces additionnelles 28 et les ouvertures 26 sur les secondes parties extrémales 27 de l'organe de retenue. Mais, tout autre moyen de fixation amovible peut être envisagé à condition qu'il demeure dans le cadre des revendications ci-après.

Par ailleurs, le dispositif de fixation décrit ci-avant est prévu pour un moteur muni de quatre pattes de fixation, mais il est clair que l'on pourra prévoir des boîtiers munis d'un nombre inférieur ou supérieur d'évidements en fonction du nombre de pattes de fixation du moteur électrique.

Enfin, l'organe de retenue 22 pourrait être constitué d'une paroi comprenant une partie centrale identique à celle décrite précédemment et comprenant une partie des moyens de fixation, comme par exemple les ergots 25, prolongés à perpendicularité par une première extrémité du type de celle décrite précédemment servant de support à la face axiale inférieure 21 des éléments amortisseurs 4. Un tel organe de retenue présenterait une coupe transversale en forme de L retourné.

## Revendications

1. Dispositif de fixation élastique d'un moteur électrique (6) à l'intérieur d'un boîtier (1), le moteur étant muni de pattes de fixation radiales (13) recevant des éléments amortisseurs (15) propres à être logés dans des évidements (4) de forme adaptée prévus à l'intérieur du boîtier (1), lesdits évidements (4) présentant chacun une face radiale ouverte (11) et une face axiale ouverte (12) pour autoriser l'introduction ou l'enlèvement axial dudit moteur (6),
caractérisé en ce qu'il comprend un organe de retenue (22) de forme adaptée à celle du boîtier (1) et comportant au moins une surface d'appui (24) propre à supporter chaque élément amortisseur (15) dans la région de la face axiale ouverte (12) de l'évidement (4) qui le loge,
en ce qu'il comprend en outre des moyens de fixation amovible (25, 26) entre le boîtier (1) et l'organe de retenue (22), propres à immobiliser axialement chaque patte de fixation (13) à l'intérieur d'un évidement (4), et
en ce que les éléments amortisseurs (15) comprennent sur leurs faces externes (16-21), en regard des évidements (4), une pluralité de rainures (30-32), ce qui permet à la fois le rattrapage axial par les moyens de fixation de l'organe de retenue (22) et le découplage élastique, dans toutes les directions, entre le moteur (6) et le boîtier (1).

2. Dispositif selon la revendication 1, caractérisé en ce que les moyens de fixation amovible (25, 26) comprennent des ouvertures (26) de forme sensiblement rectangulaire, chaque ouverture étant réalisée dans une face radiale fermée (7, 28) de chaque évidement (4), et des saillies (25) formant ergot de forme adaptée aux ouvertures (26), chaque ergot étant logé sur l'organe de retenue (22) en regard d'une ouverture (26).

3. Dispositif selon l'une des revendications 1 et 2, dans lequel les évidements (4) présentent des faces d'extension axiale identique, caractérisé en ce qu'au moins la face radiale fermée (7) se prolonge axialement dans sa partie inférieure, le prolongement (28) ainsi défini comprenant l'ouverture (26).

4. Dispositif selon l'une des revendications 1 à 3, caractérisé en ce que l'organe de retenue (22) est une paroi comportant une partie centrale (23) prolongée au moins au niveau de chaque évidement (4), d'une part, par une première partie extrémale (24), formant la surface d'appui, et d'autre part, par une seconde partie extrémale (27) sensiblement parallèle à la face radiale fermée (7, 28) et comprenant l'ergot (25).

5. Dispositif selon la revendication 4, caractérisé en ce que la seconde partie extrémale (27) est sensiblement parallèle à la partie centrale (23) et réalise avec celle-ci une goulotte de section en U.

6. Dispositif selon l'une des revendications 3 et 4, caractérisé en ce que la surface d'appui (24) est sensiblement perpendiculaire à la partie centrale (23).

7. Dispositif selon l'une des revendication 1 à 6, caractérisé en ce que les rainures (30-32) sont disposées sur les faces externes des éléments amortisseurs (15) selon l'une au moins des directions axiale, radiale et tangentielle.

8. Dispositif selon la revendication 7, dans lequel l'élément amortisseur (15), en matériau élastique, forme une structure évidée à cinq faces externes, dont une face radiale (18) en regard d'une face radiale fermée (7) d'un évidement, une face axiale inférieure (21) en regard de la surface d'appui (24) de l'organe de retenue (22), une face axiale supérieure (20) en regard de la face axiale fermée (10) dudit évidement, et deux faces latérales (16 et 17) en regard des faces latérales fermées (9 et 8) dudit évidement,
caractérisé en ce que la face radiale (18) comprend les rainures tangentielles (30),
en ce que les faces axiales inférieure (21) et supérieure (20) comprennent les rainures radiales (31), et
en ce que les faces latérales (16, 17) comprennent les rainures axiales (32).

## Patentansprüche

1. Vorrichtung zur elastischen Befestigung eines Elektromotors (6) in einem Gehäuse (1), wobei der Motor mit radialen Befestigungsansätzen (13) versehen ist, in die Dämpferelemente (15) eingesetzt werden, die in Aussparungen (4) mit angepaßter Form aufgenommen werden können, die im Innern des Gehäuses (1) vorgesehen sind, wobei die besagten Aussparungen (4) jeweils eine offene radiale Fläche (11) und eine offene axiale Fläche (12) aufweisen, um das Einsetzen oder das axiale Herausnehmen des besagten Motors (6) zu ermöglichen,
**dadurch gekennzeichnet,** daß sie ein Halteorgan (22) umfaßt, dessen Form an die des Gehäuses (1) angepaßt ist und das mindestens eine Auflagefläche (24) umfaßt, um jedes Dämpferelement (15) im Bereich der offenen axialen Fläche (12) der Aussparung (4) zu tragen, die es aufnimmt,
daß sie außerdem Mittel zur abnehmbaren Befestigung (25, 26) zwischen dem Gehäuse (1) und dem Halteorgan (22) umfaßt, um jeden Befestigungsansatz (13) axial im Innern einer Aussparung (4) zu sichern, und
daß die Dämpferelemente (15) auf ihren Außenflächen (16-21), gegenüber den Aussparungen (4), eine Mehrzahl von Nuten (30-32) enthalten, wodurch sowohl der axiale Spielausgleich durch die Befestigungsmittel des Halteorgans (22) als auch die in allen Richtungen erfolgende elastische Entkopplung zwischen dem Motor (6) und dem Gehäuse (1) ermöglicht wird.

2. Vorrichtung nach Anspruch 1 , **dadurch gekennzeichnet**, daß die Mittel zur abnehmbaren Befestigung (25, 26) Öffnungen (26) mit einer in etwa rechteckigen Form enthalten, wobei jede Öffnung in einer geschlossenen radialen Fläche (7, 28) jeder Aussparung (4) ausgeführt ist, und Vorsprünge (25), die Nasen mit einer an die Öffnungen (26) angepaßten Form bilden, wobei jede Nase am Halteorgan (22) gegenüber einer Öffnung (26) aufgenommen ist.

3. Vorrichtung nach einem der Ansprüche 1 und 2, bei der die Aussparungen (4) Flächen mit identischer axialer Ausdehnung aufweisen , **dadurch gekennzeichnet**, daß zumindest die geschlossene radiale Fläche (7) axial in ihrem unteren Teil verlängert wird, wobei die so gebildete Verlängerung (28) die Öffnung (26) enthält.

4. Vorrichtung nach einem der Ansprüche 1 bis 3, **dadurch gekennzeichnet**, daß das Halteorgan (22) eine Wand ist, die einen Mittelteil (23) umfaßt, der zumindest in Höhe jeder Aussparung (4) einerseits durch einen ersten Abschlußteil (24), der die Auflagefläche bildet, und andererseits durch einen zweiten Abschlußteil (27) verlängert wird, der in etwa parallel zu der geschlossenen radialen Fläche (7, 28) verläuft und die Nase (25) enthält.

5. Vorrichtung nach Anspruch 4 , **dadurch gekennzeichnet**, daß der zweite Abschlußteil (27) in etwa parallel zum Mittelteil (23) verläuft und mit diesem eine Hohlkehle mit U-förmigem Querschnitt bildet.

6. Vorrichtung nach einem der Ansprüche 3 und 4, **dadurch gekennzeichnet,** daß die Auflagefläche (24) in etwa senkrecht zum Mittelteil (23) verläuft.

7. Vorrichtung nach einem der Ansprüche 1 bis 6, **dadurch gekennzeichnet**, daß die Nuten (30-32) auf den Außenflächen der Dämpferelemente (15) entlang mindestens einer der axialen, radialen und tangentialen Richtungen angeordnet sind.

8. Vorrichtung nach Anspruch 7 , bei der das Dämpferelement (15) aus elastischem Material eine ausgesparte Struktur mit fünf Außenflächen bildet, darunter eine radiale Fläche (18) gegenüber einer geschlossenen radialen Fläche (7) einer Aussparung, eine axiale Unterseite (21) gegenüber der Auflagefläche (24) des Halteorgans (22), eine axiale Oberseite (20) gegenüber der geschlossenen axialen Fläche (10) der besagten Aussparung und zwei Seitenflächen (16 und 17) gegenüber den geschlossenen Seitenflächen (9 und 8) der besagten Aussparung,
**dadurch gekennzeichnet**, daß die radiale Fläche (18) die tangentialen Nuten (30) enthält,
daß die axialen Unter- (21) und Oberseiten (20) die radialen Nuten (31) enthalten und
daß die Seitenflächen (16, 17) die axialen Nuten (32) enthalten.

## Claims

1. A device for the resilient fastening of an electric motor (6) within a housing (1), the motor being provided with radial fastening lugs (13) receiving damping elements (15) which are adapted to be lodged within cavities (4) of matching shape, which are defined within the housing (1), each of the said cavities (4) having an open radial face (11) and an open axial face (12) to enable the said motor (6) to be introduced or removed axially,
characterised in that it includes a retaining member (22) the shape of which is matched to that of the housing (1), and which has at least one engagement surface (24) for supporting each damping element (15) in the region of the open axial face (12) of the cavity (4) in which it is lodged,
in that it further includes removable fastening means (25, 26) between the housing (1) and the retaining member (22), for immobilising each fastening lug (13) axially within a cavity (4), and
in that the damping elements (15) include on their outer faces (16 - 21), facing towards the cavities (4), a plurality of grooves (30 - 32), which enable the retaining member (22) to be trapped axially by the fastening means, and at the same time permit elastic decoupling in all directions between the motor (6) and the housing (1).

2. A device according to Claim 1, characterised in that the removable fastening means (25, 26) comprise substantially rectangular apertures (26), each aperture being formed in a closed radial face (7, 28) of each cavity (4), and projections (25) constituting spigots having a shape matched to the apertures (26), each spigot being disposed on the retaining member (22) facing an aperture (26).

3. A device according to Claim 1 or Claim 2, in which the cavities (4) have identical axial extension faces, characterised in that at least the closed radial face (7) is extended axially in its lower part, with the extension (28) thus defined including the aperture (26).

4. A device according to one of Claims 1 to 3, characterised in that the retaining member (22) is a wall having a central portion (23) which is extended at least at the level of each cavity (4), firstly by a first terminal portion (24) constituting the engagement surface, and secondly by a second terminal portion (27) which is substantially parallel to the closed radial face (7, 28) and which includes the spigot (25).

5. A device according to Claim 4, characterised in that the second terminal portion (27) is substantially parallel to the central portion (23), and defines with the latter a channel element having a U-shaped cross section.

6. A device according to Claim 3 or Claim 4, characterised in that the engagement surface (24) is substantially perpendicular to the central portion (23).

7. A device according to one of Claims 1 to 6, characterised in that the grooves (30 - 32) are disposed on the outer faces on the damping elements (15) in at least one of the axial, radial and tangential directions.

8. A device according to Claim 7, in which the damping element (15), being of resilient material, defines a hollow structure having five external faces, comprising a radial face (18) facing towards a closed radial face (7) of a cavity, a lower axial face (21) facing towards the engagement surface (24) of the retaining member (22), an upper axial face (20) facing towards the closed axial face (10) of the said cavity, and two lateral faces (16 and 17) facing towards the closed lateral faces (9 and 8) of the said cavity, characterised in that the radial face (18) has tangential grooves (30),
in that the lower axial face (21) and the upper axial face (20) have radial grooves (31), and
in that the lateral faces (16, 17) have axial grooves (32).
